# EUROPEAN PATENT SPECIFICATION

(11) **EP 1 169 868 B1**
(45) Date of publication and mention of the grant of the patent: **18.10.2006**
(21) Application number: 01911490.9
(22) Date of filing: 15.01.2001
(51) Int. Cl.: H04N 7/30, H04N 7/26

(54) **METHOD OF REDUCING BLOCKING ARTIFACTS**
VERFAHREN UND ANORDNUNG ZUR REDUKTION VON BLOCKARTEFAKTEN
PROCEDE DE REDUCTION DES ARTEFACTS DE BLOCAGE

(30) Priority: 04.02.2000 EP 00400319
(43) Date of publication of application: 09.01.2002
(73) Proprietor: Koninklijke Philips Electronics N.V., 5621 BA Eindhoven (NL)
(72) Inventor: GESNOT, Arnaud, NL-5656 AA Eindhoven (NL)
(74) Representative: van Oudheusden-Perset, Laure E.
(86) International application number: PCT/EP2001/000460
(87) International publication number: WO 2001/058169

(56) References cited:
- US-A- 5 229 864
- BARZYKINA E ; WARD R K : "Removal of blocking artifacts using random pattern filtering" PROCEEDINGS 1999 INTERNATIONAL CONFERENCE ON IMAGE PROCESSING (CAT. 99CH36348), PROCEEDINGS OF 6TH INTERNATIONAL CONFERENCE ON IMAGE PROCESSING (ICIP'99), vol. 2, 24 - 28 October 1999, pages 904-908, XP002170651 Kobe, Japan

## Description

### FIELD OF THE INVENTION

The invention relates to a method of processing an input signal, said input signal comprising blocks and said blocks comprising n-bits binary input samples, with n being an integer.

The invention is particularly relevant for the post-processing of video signals which have been encoded using a block-based compression method, such as, for example, the one described in MPEG-2, MPEG-4, H.261 or H.263 standards, and may be used in order to reduce blocking artifacts caused by the compression.

### BACKGROUND ART

The United States patent US 4,941,043 gives a method of reducing blocking artifacts in a video signal. A transmit side encoder transmits frequency limitation parameters allocated to the individual blocks of the video signal. The frequency limitation parameters are used at the receive-side decoder to control a block filter function at the output of the decoder that outputs a decoded video signal, controlling this for post-processing of the decoded video signal for the purpose of reducing the blocking artifacts. The proposed method is based on the fact that disturbing effects are dependent on the degree of frequency limitations applied at the level of the encoder. Moreover, this proposed method is rather complex and requires parameters from the encoder, which might not always be available.

US patent n° 5 229 864 discloses a method of processing an input signal, said input signal comprising blocks and said blocks comprising n-bit binary input samples, with n being an integer, said method of processing comprising a low pass filtering step applied to the input signal, which results in a filtered signal comprising filtered samples; a determination step for determining a correction area around block boundaries; a correction step for adding a random binary number comprising at least one bit to the filtered samples belonging to the correction area, which results in an output signal.

A similar method is disclosed in "Removal of blocking artifacts using random pattern filtering" by BARZYKINA et al., PROCEEDINGS 1999 INTERNATIONAL CONFERENCE ON IMAGE PROCESSING (CAT. 99CH36348), PROCEEDINGS OF 6^{TH} INTERNATIONAL CONFERENCE ON IMAGE PROCESSING (ICIP199), vol. 2, 24 October 1999 (1999-10-24), - 28 October 1999 (1999-10-28) pages 904-908, XP002170651 Kobe, Japan

### SUMMARY OF THE INVENTION

It is an object of the invention to provide a simple and efficient method of processing a digital signal for reducing blocking artifacts, without an a priori knowledge of the encoding parameters of the input signal.

To this end, a method of processing such as described in the prior art further comprises a step of multiplying the input samples by a power of 2, which results in a modified signal comprising modified samples of m-bit binary numbers, said filtering step being applied to the modified signal around block boundaries, said determination step comprising a computing sub-step of mask values equal to the m-n least significant bits of the filtered samples, and said correction step adding the random binary number to the filtered samples divided by the power of 2 when the mask values are different from zero, which results in the output signal.

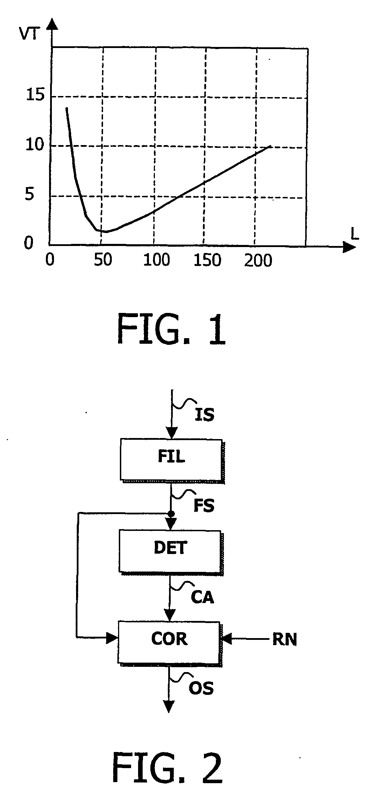

Said method of processing is especially efficient in uniform areas of medium contrast and low temporal activity, where a block edge difference of luminance or chrominance equal to 1 for a luminance value L0, is visible to the human eye. This fact is illustrated in Fig. 1, which shows the evolution of the visibility threshold VT as a function of the luminance signal L under certain conditions of contrast, spatial activity and temporal activity. The visibility threshold and the luminance signal values are comprised between 0 and 255 in this example and L0 is around 50.

As a consequence, the method of processing according to the invention allows the visibility of blocking artifacts to be reduced in all cases by filtering at block boundaries. Moreover; this method of processing also allows the visibility of blocking artifacts to be reduced in uniform areas when the block edge difference is minimal, by adding random noise around the block boundary, in which particular case the usual processing methods based on low pass filtering are inefficient.

The present invention also relates to a computer program product for a receiver, such as a television set or a set-top-box, which product comprises a set of instructions, which, when loaded into the receiver causes the receiver to carry out the previously described method of processing.

These and other aspects of the invention will be apparent from and will be elucidated with reference to the embodiments described hereinafter.

### BRIEF DESCRIPTION OF THE DRAWINGS

The invention will now be described in more detail, by way of example, with reference to the accompanying drawings, in which :
Fig. 1 shows the variation of the visibility threshold as a function of the luminance signal in certain conditions of contrast, spatial activity and temporal activity,
Fig. 2 shows a block diagram of a method in accordance with the invention,
Fig. 3a illustrates a block boundary in a uniform area with a block edge difference of 1,
Fig. 3b illustrates the result of a step of multiplying the input samples by 4 according to the invention,
Fig. 3c illustrates the result of a filtering step according to the invention,
Fig. 3d illustrates the result of a step of determining a correction area according to the invention, and

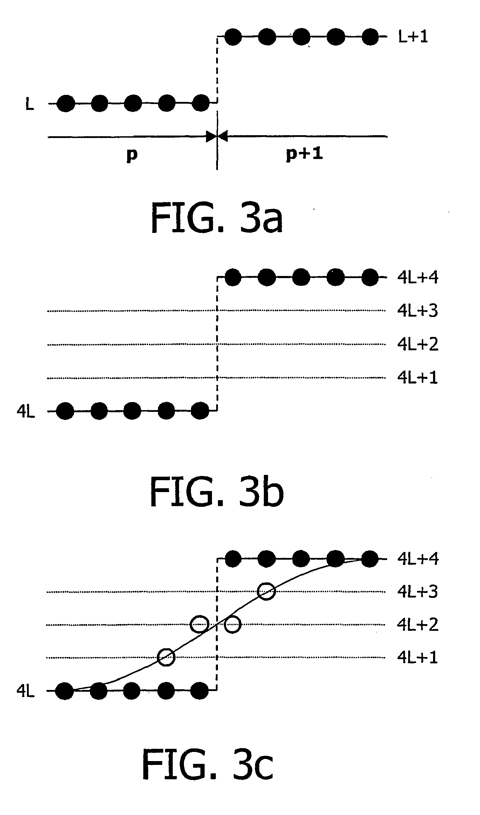

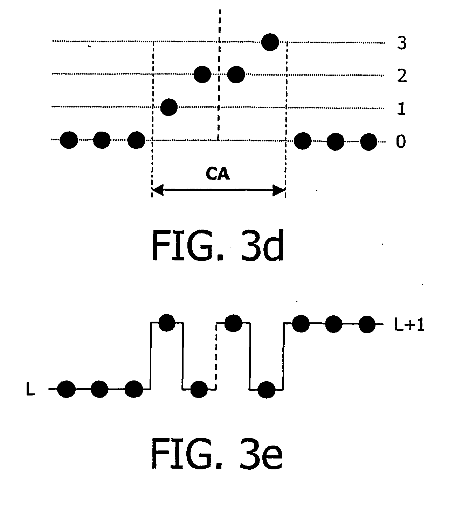

Fig. 3 e illustrates the result of a correction step according to the invention.

### DETAILED DESCRIPTION OF THE INVENTION

A method of processing according to the invention is depicted in Fig. 2. Such a method of processing comprises at least:
- a low pass filtering step (FIL) applied to the input signal (IS), which results in a filtered signal (FS) comprising filtered samples,
- a determination step (DET) for determining a correction area (CA) around block boundaries,
- a correction step (COR) for adding a random binary number (RN) comprising at least one bit to the filtered samples belonging to the correction area, which results in an output signal (OS).

In the preferred embodiment, the input signal is a MPEG-2 video signal, which has been encoded and decoded using 8x8 blocks, said blocks comprising n-bit binary input samples, with n being an integer. The input samples are, for example, the luminance or the chrominance samples or both of them. It will be apparent to a person skilled in the art that the method of processing is intended to be used for any signal that has been encoded and decoded using a block-based processing.

The method of processing according to the invention comprises five main steps, which are illustrated by Fig. 3a to Fig. 3e.

Fig. 3a shows a row or a column of two adjacent blocks p and p+1 in a uniform area with a block edge difference of 1. The input samples are represented by black dots, the values of the input samples belonging to the block p being equal to L and the values of the input samples belonging to the block p+1 being equal to L+1, with p and L being integers.

Fig. 3b shows a multiplication of the input samples by a power of 2, which results in a modified signal comprising modified samples of m-bit binary numbers. In the preferred embodiment, the power of 2 is 4 and, as a consequence, m is equal to n+2.

Fig. 3c illustrates the filtering of the modified signal around the block boundaries. The filter used is a low pass filter. If such a filter was applied directly to the input signal, the filtering would be of no use in the case of a block edge difference of 1. Depending on the filter characteristics, the values of some modified samples are changed. The filtered samples are here represented as circles.

Fig. 3d shows the determination of a correction area, which consists in the computing of mask values associated with the input samples and equal to the 2 least significant bits of the filtered samples. In the present example, the mask values MV are the following:
- if FS[i][j] = 4L then MV = 4L%4 = 0,
- if FS[i][j] = 4L+1 then MV = (4L+1)%4 = 1,
- if FS[i][j] = 4L+2 then MV = (4L+2)%4 = 2,
- if FS[i][j] = 4L+3 then MV = (4L+3)%4 = 3,
- if FS[i][j] = 4L+4 then MV = (4L+4)%4 = 0,
where : - i, j are integers such as i=0 to 7 and j=0 to 7,
- % is the operation such as a%b gives the remainder of the division of a by b.

In the preferred embodiment, the correction area (CA) corresponds to the area where the mask values are different from zero.

In another embodiment, the correction area can be determined arbitrarily as being equal, for example, to 4 pixels : 2 pixels on each side of the block boundary. With such an embodiment, the multiplication of the input samples by a power of 2 and the division of the filtered samples by said power of 2 are no longer required but the method of processing is less flexible.

Fig. 3e shows the output signal which, when the mask values are different from zero, results from an addition of a random binary number to the filtered samples divided by 4. In the preferred embodiment, the random binary number is 0 or 1 and is generated by a random number generator.

The method of processing in accordance with the invention is applied in the horizontal direction and in the vertical direction, the horizontal and vertical processing being similar and being applied successively in any order. Such a method of processing is implemented in an integrated circuit, which is intended to be integrated, for example, in a set-top-box or in a television receiver.

The method of processing in accordance with the invention can be implemented in an integrated circuit, which is intended to be integrated into a set top box or a television receiver. A set of instructions that is loaded into a program memory causes the integrated circuit to carry out said processing method. The set of instructions may be stored on a data carrier such as, for example, a disk. The set of instructions can be read from the data carrier so as to load it into the program memory of the integrated circuit which will then fulfil its role.

It will be obvious that the use of the verb "to comprise" and its conjugations does not exclude the presence of any other steps or elements besides those defined in any claim.

## Claims

1. A method of processing an input signal (IS), said input signal comprising blocks and said blocks comprising n-bit binary input samples, with n being an integer, said method of processing comprising at least :
- a low pass filtering step (FIL) applied to the input signal, which results in a filtered signal (FS) comprising filtered samples,
- a determination step (DET) for determining a correction area (CA) around block boundaries,
- a correction step (COR) for adding a random binary number (RN) comprising at least one bit to the filtered samples belonging to the correction area, which results in an output signal (OS),
**characterized in that** said method also comprises a step of multiplying the input samples by a power of 2, which results in a modified signal comprising modified samples of m-bit binary numbers, said filtering step being applied to the modified signal around block boundaries, said determination step comprising a computing sub-step of mask values equal to the m-n least significant bits of the filtered samples, and said correction step adding the random binary number to the filtered samples divided by the power of 2 when the mask values are different from zero, which results in the output signal.

2. A computer program product for a television receiver that comprises a set of instructions, which, when loaded into the television receiver causes the television receiver to carry out the method as claimed in claim 1.

3. A computer program product for a set-top-box that comprises a set of instructions, which, when loaded into the set-top-box causes the set-top-box to carry out the method as claimed in claim 1.

## Patentansprüche

1. Verfahren zum Verarbeiten eines Eingangssignals (IS), wobei das genannte Eingangssignal Blöcke aufweist und die genannten Blöcke n-bit binäre Eingangsabtastwerte aufweisen, wobei n eine ganze Zahl ist, wobei das genannte Verarbeitungsverfahren wenigstens die nachfolgenden Verfahrensschritte umfasst:
- einen Tiefpassfilterschritt (FIL), angewandt auf das Eingangssignal, was zu einem gefilterten Signal (FS) führt, das gefilterte Abtastwerte aufweist,
- einen Ermittlungsschritt (DET) um ein Korrekturgebiet (CA) um Blockgrenzen herum zu ermitteln,
- einen Korrekturschritt (COR) zum Hinzufügen einer beliebigen binären Zahl (RN) mit wenigstens einem Bit zu den gefilterten Abtastwerten, die zu dem Korrekturgebiet gehören, was zu einem Ausgangssignal (OS) führt,
**dadurch gekennzeichnet, dass** das genannte Verfahren auch einen Schritt zum Multiplizieren der Eingangsabtastwerte mit einer Zweierpotenz umfasst, was zu einem modifizierten Signal mit modifizierten Abtastwerten von m-bit binären Zahlen führt, wobei der genannte Filterschritt auf das modifizierte Signal um Blockbegrenzungen herum angewandt wird, wobei der genannte Ermittlungsschritt einen Rechensubschritt von Maskierungswerten gleich den m-n am wenigsten signifikanten Bits der gefilterten Abtastwerte umfasst, und wobei der genannte Korrekturschritt die beliebige binäre Zahl zu den gefilterten Abtastwerten geteilt durch die Zweierpotenz hinzuaddiert, wenn die Maskierungswerte von Null abweichen, was zu dem Ausgangssignal führt.

2. Computerprogrammprodukt für einen Fernsehempfänger, das einen Satz mit Instruktionen aufweist, die, wenn in den Fernsehempfänger geladen, dafür sorgen, dass der Fernsehempfänger das Verfahren nach Anspruch 1 durchführt.

3. Computerprogrammprodukt für eine Settopbox, das einen Satz mit Instruktionen aufweist, die, wenn in die Settopbox geladen, dafür sorgen, dass die Settopbox das Verfahren nach Anspruch 1 durchführt.

## Revendications

1. Procédé de traitement d'un signal d'entrée (IS), ledit signal d'entrée comprenant des blocs et lesdits blocs comprenant des échantillons d'entrée binaires de n bits, n étant un nombre entier, ledit procédé de traitement comprenant au moins:
- une étape de filtrage passe-bas (FIL) qui est appliquée au signal d'entrée (IS), ce qui a pour conséquence un signal filtré (FS) comprenant des échantillons filtrés,
- une étape de détermination (DET) pour déterminer une zone de correction (CA) autour de limites de blocs,
- une étape de correction (COR) pour ajouter un nombre binaire aléatoire (RN) comprenant au moins un bit aux échantillons filtrés appartenant à la zone de correction, ce qui a pour conséquence un signal de sortie (OS),
**caractérisé en ce que** ledit procédé comprend également une étape de multiplication des échantillons d'entrée par une puissance égale à 2, ce qui a pour conséquence un signal modifié comprenant des échantillons modifiés de nombres binaires de m bits, ladite étape de filtrage étant appliquée au signal modifié autour de limites de blocs, ladite étape de détermination comprenant une sous-étape de calcul de valeurs de masque qui sont égales aux bits les moins significatifs m-n des échantillons filtrés et ladite étape de correction ajoutant le nombre binaire aléatoire aux échantillons filtrés qui sont divisés par la puissance égale à 2 lorsque les valeurs de masque sont différentes de zéro, ce qui a pour conséquence le signal de sortie.

2. Produit de programme informatique pour un récepteur de télévision qui comprend un ensemble d'instructions qui effectue, dans le cas d'être chargé dans le récepteur de télévision, que le récepteur de télévision met en pratique le procédé selon la revendication 1.

3. Produit de programme informatique pour un terminal utilisateur qui comprend un ensemble d'instructions qui effectue, dans le cas d'être chargé dans le terminal utilisateur, que le terminal utilisateur met en pratique le procédé selon la revendication 1.
